# EUROPÄISCHE PATENTSCHRIFT

(11) **EP 1 470 959 B1**
(45) Veröffentlichungstag und Bekanntmachung des Hinweises auf die Patenterteilung: **14.06.2006**
(21) Anmeldenummer: 04007150.8
(22) Anmeldetag: 25.03.2004
(51) Int. Cl.: B60R 3/02, B61D 23/00, A61G 3/06

(54) **Trittplattenanordnung**
Arrangement of a running board
Agencement d'un marchepied

(30) Priorität: 22.04.2003 DE 10318314; 07.11.2003 DE 10351988
(43) Veröffentlichungstag der Anmeldung: 27.10.2004
(73) Patentinhaber: Zeppenfeld Industrie-Verwaltungs-GmbH, 42549 Velbert (DE)
(72) Erfinder: Schumacher, Marianne, 47809 Krefeld (DE)
(74) Vertreter: Grundmann, Dirk

(56) Entgegenhaltungen:
- WO-A-00/20252
- WO-A-98/06370
- DE-A- 3 409 257
- DE-A- 10 065 989
- DE-A- 19 928 571

## Beschreibung

Die Erfindung betrifft eine unterhalb einer Tür eines Fahrzeuges, insbesondere Schienenfahrzeug mittels Befestigungsgliedern befestigbare Trittplattenanordnung, mit einem Gehäuse und einer darin horizontal verschieblich angeordneten Trittplatte, wobei die Trittplatte von einer Schubvorrichtung aus einer Verwahrstellung in eine Vortrittsstellung aus einer Gehäuseöffnung ausfahrbar und wieder zurück in die Verwahrstellung einfahrbar ist, wobei das Aus- und Einfahren unterbrochen wird, wenn die Trittplatte gegen einen Widerstand stößt oder in Vertikalrichtung belastet wird.

Derartige Trittplattenanordnungen werden verwendet, um das Ein- und Aussteigen in ein Schienenfahrzeug zu erleichtern. Die Anordnung bzw. das die Trittplatte aufnehmende Gehäuse ist unterhalb eines Wagenkastens eines Schienenfahrzeuges montiert. Dabei befindet sich der Kasten direkt unterhalb einer Tür. Mit dem Öffnen der Tür wird die Trittplatte, die sich normalerweise in einer Verwahrstellung befindet, ausgefahren, um einen Spalt zwischen Wagen und Bahnsteig zu überbrücken. Um einen Einklemmschutz zu verwirklichen, besitzt beim Stand der Technik die vordere Stirnkante der Trittplatte Sensoren. Stößt die Trittplattenkante gegen einen Widerstand, so signalisieren diese Sensoren der Steuerung, dass der Antriebsmotor für die Schubvorrichtung ausgeschaltet wird. Ferner darf aus Sicherheitsgründen die Trittplatte nicht eingefahren werden, wenn noch eine Person auf der Trittplatte steht. Es sind somit weitere Sensoren vorgesehen, die auf Vertikalkräfte reagieren, die auf die Trittplatte aufgebracht werden.

Aus der DE 100 65 989 A1 ist eine gattungsgemäße Vorrichtung bekannt, wobei ein Trittsensor und ein Stoßsensor vorgesehen sind, um festzustellen, ob sich eine Person auf einer ausgefahrenen Trittplatte befindet bzw. ob die Trittplatte bei Ausfahren gegen ein Hindernis stößt.

Der Erfindung liegt die Aufgabe zugrunde, die gattungsgemäße Trittplattenanordnung gebrauchsvorteilhaft weiterzubilden.

Gelöst wird die Aufgabe durch die in den Ansprüchen angegebene Erfindung. Anspruch 1 sieht zunächst und im Wesentlichen vor, dass Kraftmesselemente vorgesehen sind, die sich im Kraftfluss entweder der Befestigungsglieder oder der Schubvorrichtung befinden. Alternativ dazu kann ein Kraftelement auch im Kraftschluss der Trittplattenbefestigung an einem Schiebeträger angeordnet sein. Erfindungsgemäß erfolgt die Feststellung, ob aus Sicherheitsgründen die Schubverlagerung der Trittplatte unterbrochen werden soll, über Sensoren, die an den Kraftfluss selbst geschaltet sind. Diese Kraftmesselemente sind Biegesensoren. Zur Ermittlung der Vertikalkraft ist vorzugsweise vorgesehen, dass das Gehäuse der Trittplattenanordnung vermittelst drei Befestigungsgliedern am Wagenkasten befestigt ist. Dabei können zwei Befestigungsglieder eine Wippenachse ausbilden. Diese Befestigungsglieder sind bevorzugt im Bereich der Gehäuseöffnung angeordnet, aus welcher die Trittplatte ausfährt. Das dritte Befestigungsglied ist vorzugsweise der Gehäuserückwand zugeordnet. Diesem Befestigungsglied ist das Kraftmesselement zugeordnet. Wird auf die ausgefahrene Trittplatte eine Vertikalkraft ausgeübt, so wird das rückwärtige Befestigungsglied in eine entsprechende Gegenrichtung kraftbeaufschlagt. Da diesem Befestigungsglied das Kraftmesselement zugeordnet ist, kann diese Vertikalkraft in Form eines Drehmomentes gemessen werden. In einer bevorzugten Weiterbildung der Erfindung bilden die Befestigungsglieder Elastomerlager aus. Das rückwärtige Befestigungselement kann sich an der Decke des Gehäuses abstützen. Es kann durch ein Fenster des Gehäusebodens herausragen. Zufolge dieser Ausgestaltung kann das Kraftmesselement innerhalb des Gehäuses angeordnet sein. Das Kraftmesselement, welches in den Kraftfluss der Schubbewegung geschaltet ist, sitzt vorzugsweise an einer rückwärtigen Kante der Trittplatte. An dieser Kante bzw. an diesem Kraftmesselement greift ein Lenker der Schubvorrichtung an. Diese Schubvorrichtung ist ein Kurbelantrieb. An der anderen Seite des Lenkers greift der Kurbelarm des Kurbelgetriebes an. Die Achse des Kurbelarmes wird über ein Schneckengetriebe ... von einem Antriebsmotor angetrieben, welcher sich ebenfalls im Gehäuse befindet. Der Lenker kann als Stoßdämpfer ausgebildet sein. Die Schubanordnung kann in einem rückwärtigen Freiraum der Trittplatte angeordnet sein. Die beiden Randkanten der Trittplatte sind mit Rollenlagern verbunden, die auf gehäusefesten Schienen geführt sind. Es ist insbesondere vorgesehen, dass eine Vertikalbelastung der Trittplatte unmittelbar durch eine Verbiegung derselben, insbesondere einer Verbiegung gegenüber einem Schiebeträger detektiert wird. Hierzu kann vorgesehen sein, dass die Trittplatte im Bereich einer ihrer Stirnkanten von Lagerarmen untergriffen wird. Vorzugsweise wird die vordere Stirnkante von Lagerarmen untergriffen. Es bildet sich dadurch eine dieser Stirnkante zugeordnete Lagerstelle der Trittplatte aus. Wird die Trittplatte vertikal belastet, so kann die Trittplatte um diesen Lagerpunkt geringfügig verschwenken. Dem Bereich der anderen Stirnkante, insbesondere der rückwärtigen Stirnkante ist das Kraftmesselement zugeordnet. Der entsprechende Bereich der Trittplatte soll vom Kraftmesselement unterstützt werden. Wird die Trittplatte im Bereich der rückwärtigen Stirnkante vertikal belastet, so gibt das Kraftmesselement ein Signal ab. Wird dagegen die Trittplatte im Bereich der vorderen Stirnkante belastet, so können sich die Lagerarme geringfügig verbiegen. Auch dies hat zur Folge, dass das Kraftmesselement ein Signal abgibt, wenn dieses als Biegesensor ausgebildet ist. Es erweist sich somit als vorteilhaft, wenn sich die Lagerarme bei einer Vertikalbelastung der Trittplatte geringfügig verbiegen können. Es reicht aus, wenn im Bereich einer der beiden Stirnkanten ein einziges Kraftmesselement vorgesehen ist. Dieses kann etwa mittig an einem Trägerbalken angeordnet sein, wobei der Trägerbalken dem Schiebeträger zugeordnet ist. Als Schiebeträger wird insbesondere die rahmenartige Struktur angesehen, die einerseits die Trittplatte trägt und andererseits mit den Rollenlagern verbunden ist, auf welchen die Trittplatte in das Gehäuse oder aus ihrem Gehäuse verlagert werden kann. Als besonders vorteilhaft wird es angesehen, wenn das weitere Kraftmesselement, welches insbesondere mit dem Kurbeltrieb zusammenwirkt, ebenfalls mittig an diesem Trägerbalken angeordnet ist.

Ausführungsbeispiele der Erfindung werden nachfolgend anhand beigefügter Zeichnungen erläutert. Es zeigen:
- Fig. 1: in schematischer Darstellung die Lage einer erfindungsgemäßen Trittplattenanordnung unterhalb einer Fahrzeugtür eines Wagenkastens in der Verwahrstellung,
- Fig. 2: eine Darstellung gemäß Fig. 1 in der ausgefahrenen Stellung,

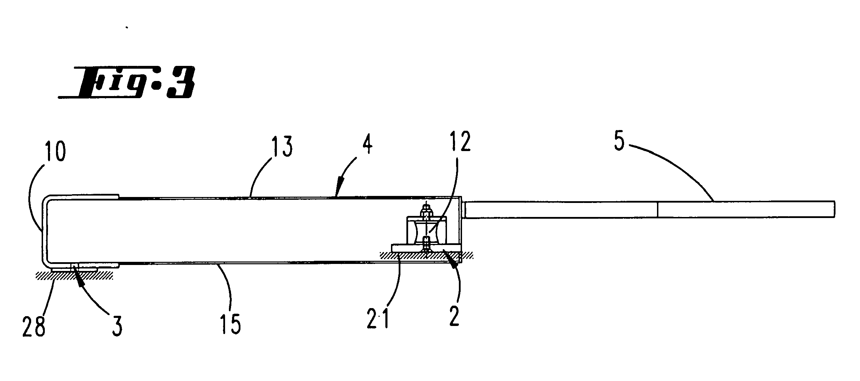

- Fig. 3: eine Darstellung gemäß Fig. 2 als Seitenansicht auf das Gehäuse,

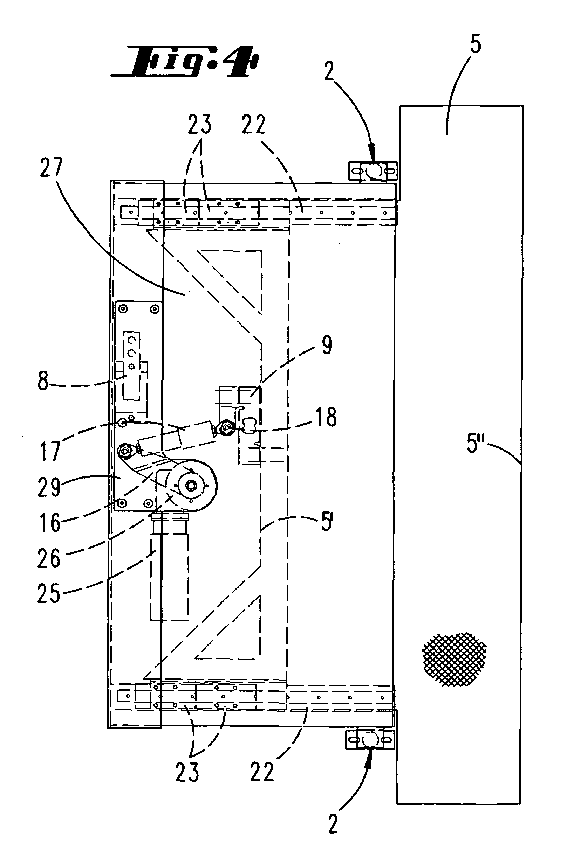

- Fig. 4: eine Draufsicht auf das Gehäuse in der Verfahrstellung,
- Fig. 5: eine Darstellung gemäß Fig.4 in der ausgefahrenen Stellung,
- Fig. 6: eine Frontansicht auf das Gehäuse,
- Fig. 7: einen Schnitt gemäß der Linie VII-VII in Fig. 5,
- Fig. 8: einen Schnitt gemäß der Linie VIII-VIII in Fig. 5,
- Fig. 9: ein zweites Ausführungsbeispiel in einer Darstellung gemäß Fig. 4,
- Fig. 10: eine Schnittdarstellung gemäß der Linie X - X in Fig. 9,
- Fig. 11: eine Darstellung gemäß Fig. 9 jedoch in ausgefahrenem Zustand der Trittplatte und
- Fig. 12: einen Schnitt gemäß der Linie XII - XII in Fig. 11.

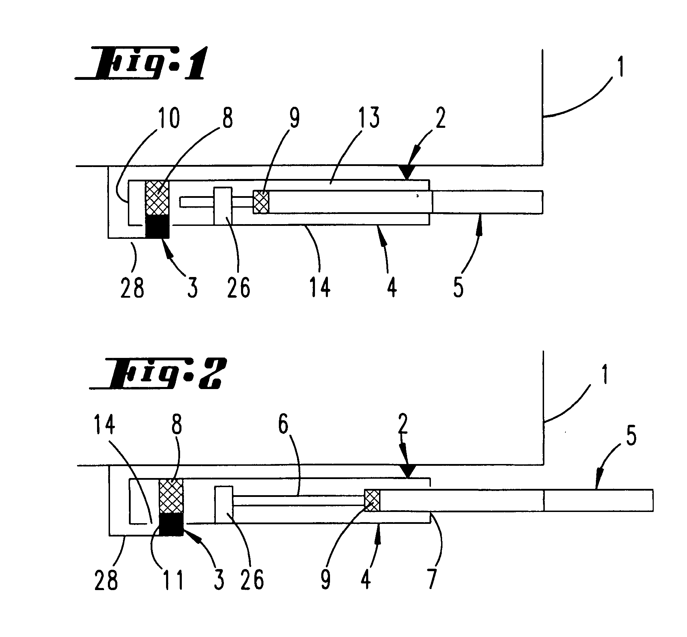

Der erfindungsgemäße Schiebetritt wird als Spaltüberbrückung zwischen Fahrzeug und Bahnsteig über Linearführungen 22, 23 und einem elektrischen Antrieb 25, 26 aus der eingefahrenen Position (Fig.1) unterhalb des Fahrzeuges und der Fahrzeugtür 1 in die Ausfahrstellung (Fig. 2) horizontal hinaus geschoben. Die Trittstufe 5 darf sich nicht bewegen, wenn sie betreten wird. Fahrgäste dürfen durch eine sich bewegende Trittstufe 5 nicht verletzt werden. Es muss ein Einklemmschutz gewährleistet sein. Aus diesem Grunde wird der Schiebetritt beim Aus- und Einfahren über Wägezellen 8, 9 automatisch überwacht. Jede Wägezelle 8, 9 ist ein DMS-Messsystem für die Messung von axialen Druckkräften. Das Messelement ist eine Messfeder, auf die der Dehnungsmessstreifen (DMS) angewendet wird. Durch die in Messrichtung wirkende Kraft wird die Messfeder und damit die DMS elastisch verformt und ändert proportional zur ihrer Längenänderung ihren ohmschen Widerstand. Mit Hilfe der Dehnungsmessstreifen wird die eingeleitete Kraft in ein elektrisches Signal umgewandelt. Dieses Messsignal wird über eine Schnittstelle an die Steuerung für die Trittplatte weiter geleitet.

Damit der Schiebetritt 5 bei einer Belastung elektrisch nicht verfahren werden kann, ist der Schiebetritt mit einer Wägezelle 8, 9 ausgestattet. Das Gehäuse 4 des Schiebetritts ist an drei Befestigungsstellen mittels Befestigungsglieder 2, 3 durch Elastomerlager 11, 12 mit dem Wagenkasten verbunden. Die vorderen beiden Befestigungsglieder 2 bilden eine Drehachse. Im hinteren Befestigungspunkt 3 ist eine Wägezelle 8 angeordnet. Durch die Elastomerlager 11, 12 werden Verspannungen an den Befestigungspunkten ausgeschlossen und damit Beschädigungen am Messsystem verhindert. Im eingebauten Zustand der Vorrichtung ruht die Gewichtskraft auf den drei Auflagepunkten 2, 3. Im einfahrenen, unbelassenen Zustand der Trittplatte 5 ruht ca. 50 % der Gewichtskraft auf dem hinteren Auflagepunkt 3. Die restliche Gewichstkraft verteilt sich gleichmäßig auf die beiden vorderen Auflagepunkte 2. Im ausgefahrenen Zustand der Trittplatte 5 verschiebt sich die Aufteilung der Gewichtskraft derart, dass auf die vorderen Auflagepunkte 2 ca. 70% und auf dem hinteren Auflagepunkt ca. 30% der Gewichtskraft aufliegt. Wirkt im ausgefahrenen Zustand der Trittplatte 5 eine senkrechte Kraft auf die Trittplatte 5 ein, so wird über die Drehachse, die von den beiden Befestigungsgliedern 2 ausgebildet wird, eine Reaktionskraft an die Wägezelle 8 des hinteren Auflagepunktes erzeugt. Bei Überschreiten eines einstellbaren Grenzwertes (maximal 150 N Trittplattenbelastung) wird die Ein- bzw. Ausfahrbewegung der Trittplatte sofort unterbrochen. Das Kraftmesssystem liefert digitale Messwerte über eine Schnittstelle an eine nicht dargestellte Stufensteuerung.

Zusätzlich zu dieser Trittplattensicherung ermöglicht die Erfindung den oben erwähnten Einklemmschutz. Um eine mögliche Quetschgefahr durch die ausfahrende Trittplatte 5 auszuschließen, ist die Anordnung mit einer Wägezelle 9 als Einklemmschutz ausgestattet. Es wird die horizontale Belastung der ausfahrenden Trittplatte 5 durch einen Kraftaufnehmer 9 überwacht. Hierzu wird der Kraftfluss zwischen Kurbelmechanik 26, 16, 17 des Antriebes 25 und der Führungseinheit der Trittplatte 5 ausgewertet. Bei Überschreiten des einstellbaren Grenzwertes (maximal 350 N) wird die Ein- bzw. Ausfahrbewegung der Trittplatte 5 sofort unterbrochen. Um Schäden am Antrieb an dem Kraftaufnehmer 9 zu vermeiden wird ein Lenker 17 des Kurbeltriebes als Stoßdämpfer ausgebildet. Auch hier liefert das Kraftmesssystem digitale Messwerte, die über eine nicht dargestellte Schnittstelle einer nicht dargestellten Stufensteuerung zugeleitet werden.

Wie aus der Fig. 1 hervorgeht befindet sich das Gehäuse 4 unterhalb einer Fahrzeugtür 1. Dabei ruht das Gehäuse 4 auf einem rückwärtigen Rahmenabschnitt 28 und zwei seitlichen Rahmenabschnitten 21. Auf dem rückwärtigen Rahmenabschnitt 28 liegt ein Elastomerlager 11. Darauf ist mittels Schrauben ein Lagerblock 24 befestigt. Mittels einer Verbindungsschraube 19 ist auf diesem Lagerbock 24 ein Ende eines Biegesensors 8 angeschraubt. Das andere Ende des Biegesensors 8 ist mittels Befestigungsschrauben 20 an der Gehäusedecke 13 des Gehäuses 4 angeschraubt. Zufolge dieser Anordnung ragt nur ein geringer Abschnitt des Befestigungsgliedes 3 durch ein Fenster 14 des Gehäusebodens 15.

Die beiden seitlichen Befestigungsglieder 2 sind ebenfalls unter Zwischenlagerung eines Elastomerlagers 12 auf einem Rahmenabschnitt 21 des Wagenkastens befestigt. Parallel zu diesem Rahmenabschnitt 21 erstrecken sich an rohrförmigen Seitenwänden des Gehäuses 4 Laufschienen 22. Auf diesen innenliegenden Laufschienen 22 befinden sich Rollenlager 3 die mit den Seitenschenkeln der Trittplatte 5 fest verbunden sind. Die Rollenlager 23 befinden sich dabei an rückwärtigen Fortsätzen der Trittplatte 5. Zwischen diesen beiden rückwärtigen Fortsätzen der Trittplatte 5 verbleibt ein Freiraum 27. Innerhalb dieses Freiraumes 27 befindet sich der Biegesensor 9, an dem ein Lager 28 sitzt, welches mit einem Ende des Lenkers 17, der als Stoßdämpfer ausgebildet ist verbunden ist. Das andere Ende des Lenkers 17 ist mit dem Ende eines Kurbelarmes 16 verbunden. Dieser sitzt auf der Abtriebswelle eines Schneckengetriebes 26, das von einem Antriebsmotor 25 angetrieben wird. Schneckengetriebe 26 und Antriebsmotor 25 befinden sich innerhalb des Gehäuses 4 und innerhalb des Freiraumes 27 auf einer gemeinsamen Tragplatte mit dem Biegesensor 8.

Tritt in der in Fig. 5 dargestellten ausgefahrenen Stellung eine Person auf die Trittplatte 5, so wird das rückwärtige Befestigungsglied 3 entlastet bzw. die Belastung umgekehrt. Dieser Lastwechsel wird vom Biegesensor an die nicht dargestellte Stufensteuerung weitergeleitet.

Tritt beim Ausfahren die vordere Stirnkante 5" gegen ein Hindernis, so wird die Kraft, die über den Lenker 17 auf den der rückwärtigen Kante 5' zugeordneten Biegesensoren 9 übertragt wird, größer. Diese Kraftvergrößerung wird von dem Biegesensor 9 der nicht dargestellten Stufensteuerung 9 mitgeteilt.

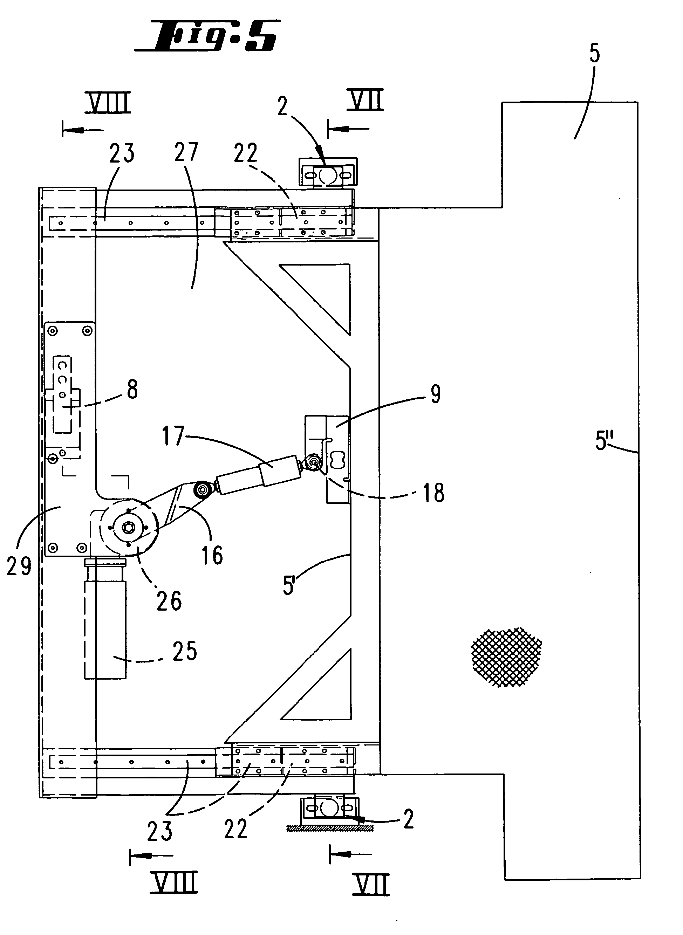

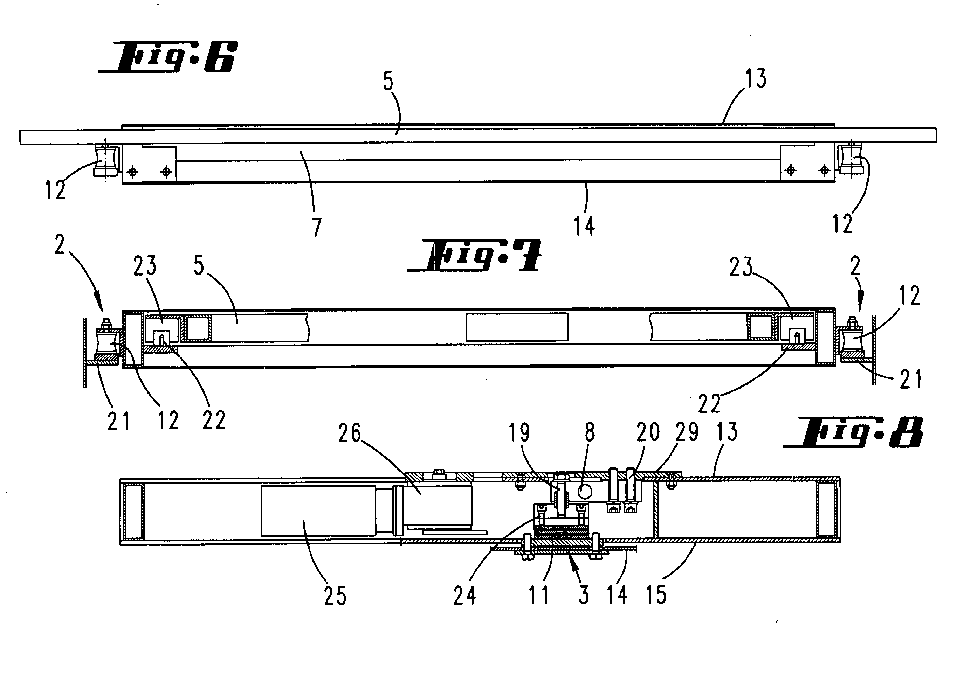

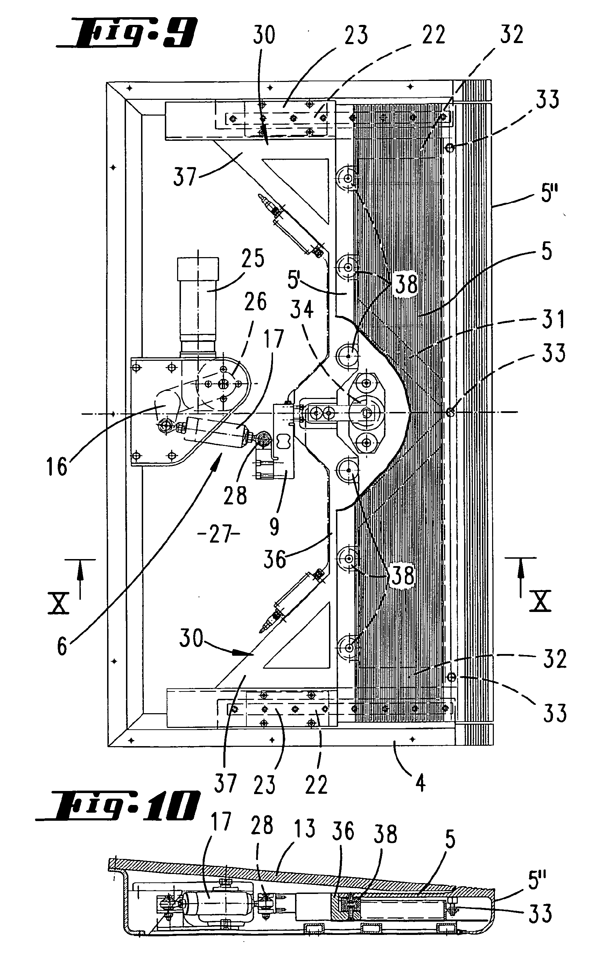

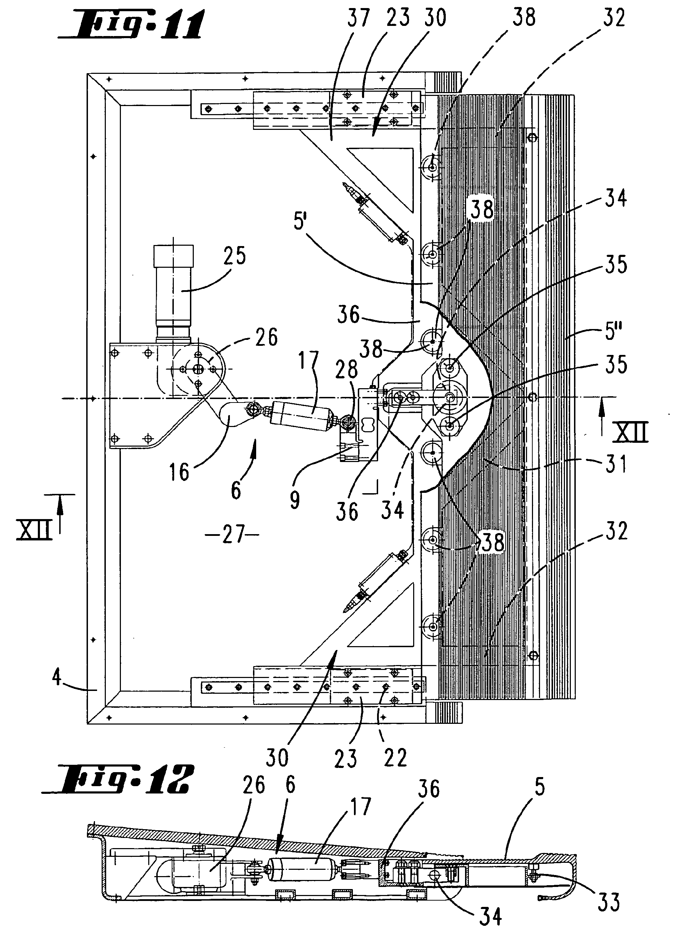

Bei dem in den Fig. 9 bis 12 dargestellten Ausführungsbeispiel ist die Trittplatte 5 an einem Schiebeträger 30 befestigt. Dieser Schiebeträger, der auch in den Fig. 5 bis 8 bereits angedeutet ist, ist mit rückwärtigen Schenkeln an Rollenlagern 23 befestigt. Dieses Rollenlager 23 ist wie bereits oben beschrieben auf einer Schiene 22 verschieblich angeordnet, um die Trittplatte 5 aus der in den Fig. 9 und 10 dargestellten Verwahrstellung in die in den Fig. 11 und 12 dargestellte Vortrittsstellung zu verlagern. Der Schiebeträger 30 besitzt darüber hinaus einen Trägerbalken 36, der die beiden Rollenlager 23 miteinander verbindet. Etwa in der Mitte des Trägerbalkens 36 befindet sich eine Abkröpfung. An dieser ist der Biegesensor 9 befestigt, an welchen die Schubvorrichtung 6 angreift. Darüber hinaus ist auf der gegenüberliegenden Seite ebenfalls mittig am Trägerbalken 36 ein Biegesensor 34 befestigt. Das andere Ende des Biegesensors 34 unterstützt die Trittplatte 5. Der Biegesensor 34 unterstützt die Trittplatte 5 im Bereich ihrer rückwärtigen Stirnkante 5'.

Der rückwärtigen Stirnkante 5' sind darüber hinaus Elastomerlager 38 zugeordnet, mit welchen die Trittplatte 5 auf dem Trägerbalken 36 abgestützt ist.

Der Schiebeträger 30 besitzt darüber hinaus nach vorne ausragende Lagerarme 32, die den Schmalseiten der Trittplatte 5 zugeordnet sind. Auch in der Mitte besitzt der Schiebeträger 30 einen Lagerarm 31. Dieser Lagerarm 31 ist V-förmig gestaltet und entspringt ebenfalls dem Trägerbalken 36.

An den freien Enden der Lagerarme 31, 32 sind höheneinstellbare Lagerpunkte 33 vorgesehen, von denen die Trittplatte 5 unterstützt wird. Diese Lagerpunkte 33 unterstützen die Trittplatte 33 im Bereich der vorderen Stirnkante 5".

Wird auf die Trittplatte 5 eine Vertikalbelastung ausgeübt, so wird auf den Biegesensor 34 ein Drehmoment ausgeübt. Dies kann entweder dadurch erfolgen, dass die Trittplatte 5 geringfügig um den Lagerpunkt 33 schwenkt, wenn die Vertikalbelastung beispielsweise im Bereich der rückwärtigen Stirnkante 5' erfolgt. Erfolgt die Vertikalbelastung im Bereich der vorderen Stirnkante 5", so wird auf den Biegesensor 34 ebenfalls ein Biegemoment ausgeübt. Hierzu kann vorgesehen sein, dass die Lagerpunkte 33 in Vertikalrichtung nachgeben können. Hierzu kann vorgesehen sein, dass die Lagerarme 31, 32 eine gewisse Durchbiegung vollziehen können. Die Elastomerlager 38 ermöglichen eine Relativverlagerung des rückwärtigen Bereichs der Trittplatte 5 gegenüber dem Trägerbalken 36.

## Patentansprüche

1. Unterhalb einer Tür (1) eines Fahrzeuges, insbesondere Schienenfahrzeuges mittels Befestigungsgliedern (2, 3) befestigbare Trittplattenanordnung, mit einem Gehäuse (4) und einer darin horizontal verschieblich angeordneten Trittplatte (5), wobei die Trittplatte (5) von einer Schubvorrichtung (6) aus einer Verwahrstellung in eine Vortrittsstellung aus einer Gehäuseöffnung (7) ausfahrbar ist und wieder zurück in die Verwahrstellung einfahrbar ist wobei das Aus- und Einfahren unterbrochen wird, wenn die Trittplatte (5) gegen einen Widerstand stößt oder in Vertikalrichtung belastet wird, **gekennzeichnet durch** im Falle einer Vertikalkraft im Kraftfluss von Befestigungsgliedern (2, 3) des Gehäuses (4) zum Angriffspunkt der Vertikalkraft oder im Falle des Stoßens gegen einen Widerstand im Kraftfluss von der Schubvorrichtung (6) zum Widerstand oder von der Trittplattenbefestigung an einem Schiebeträger (30) zum Widerstand angeordnete Biegesensoren (8, 9, 34).

2. Trittplattenanordnung nach Anspruch 1, **dadurch gekennzeichnet, dass** das Gehäuse vermittelst drei Befestigungsgliedern (2, 3) am Wagenkasten (2) des Fahrzeuges befestigt ist, zwei (2) der drei Befestigungsglieder eine Wippenachse bilden und dem dritten rückwärtigen (3) Befestigungsglied, das der Gehäuseöffnung (7) gegenüberliegt, ein Biegesensor (8) zugeordnet ist.

3. Trittplattenanordnung nach einem der vorhergehenden Ansprüche, **dadurch gekennzeichnet, dass** ein Biegesensor (8) im Gehäuse sitzt.

4. Trittplattenanordnung nach einem der vorhergehenden Ansprüche, **dadurch gekennzeichnet, dass** die Befestigungsglieder (2, 3) Elastomerlager (11,12) ausbilden.

5. Trittplattenanordnung nach einem der vorhergehenden Ansprüche, **dadurch gekennzeichnet, dass** das rückwärtige Befestigungsglied (3) sich an einer Decke des Gehäuses (13) abstützt und durch ein Fenster (14) eines Bodens des Gehäuses ragt.

6. Trittplattenanordnung nach einem der vorhergehenden Ansprüche, **dadurch gekennzeichnet, dass** die Schubvorrichtung ein Kurbelantrieb (16, 17,18) ist.

7. Trittplattenanordnung nach einem der vorhergehenden Ansprüche, **dadurch gekennzeichnet, dass** ein von einer Antriebskurbel (16) angetriebener Lenker (17) an dem Biegesensor (9) angreift.

8. Trittplattenanordnung nach einem der vorhergehenden Ansprüche, **dadurch gekennzeichnet, dass** ein Biegesensor (34) der rückwärtigen Kante (5') der Trittplatte (5) zugeordnet ist.

9. Trittplattenanordnung nach einem der Ansprüche 7 oder 8, **dadurch gekennzeichnet, dass** der Lenker (17) ein Stoßdämpfer ist.

10. Trittplattenanordnung nach einem der vorhergehenden Ansprüche, **gekennzeichnet durch** die Trittplatte (5) im Bereich ihrer einen, insbesondere vorderen Stirnkante (5') untergreifende Lagerarme (31, 32) des Schiebeträgers (30), wobei die Trittplatte (5) im Bereich ihrer anderen, insbesondere rückwärtigen Stirnkante (5') von einem Biegesensor (34) unterstützt ist.

11. Trittplattenanordnung nach Anspruch 10, **dadurch gekennzeichnet, dass** die Lagerarme (31, 32) bei einer Vertikalbelastung biegbar sind, so dass bei Belastung durch eine Person ein Biegemoment auf einen Biegesensor (34) wirkt.

12. Trittplattenanordnung nach einem der vorhergehenden Ansprüche, **dadurch gekennzeichnet, dass** ein Biegesensor (34) etwa mittig an einem Trägerbalken (36) des Schiebeträgers (30) angeordnet ist.

13. Trittplattenanordnung nach Anspruch 12, **dadurch gekennzeichnet, dass** der mit dem Kurbeltrieb (6) zusammenwirkende Biegesensor (9) etwa mittig am Trägerbalken (36) angeordnet ist.

14. Trittplattenanordnung nach einem der vorhergehenden Ansprüche, **gekennzeichnet durch** eine Relativverlagerbarkeit der rückwärtigen Stirnkante (5') der Trittplatte (5) gegenüber dem Schiebeträger (30) in Vertikalrichtung.

## Claims

1. Footboard arrangement fastenable by means of fastening members (2, 3) beneath a door (1) of a vehicle, in particular a rail vehicle, having a housing (4) and a footboard (5) arranged horizontally displaceably therein, wherein the footboard (5) is extensible by a pushing device (6) from a stowage position into an advancement position from a housing aperture (7) and is retractable again back into the stowage position, wherein the extension and retraction is stopped when the footboard (5) encounters any resistance or is subjected to load in the vertical direction, **characterised by** bending sensors (8, 9, 34) arranged, in the case of a vertical force, in the flow of force from the fastening members (2, 3) of the housing (4) to the point of application of the vertical force or, in the case of encountering any resistance, in the flow of force from the pushing device (6) to the resistance or from the footboard fastening on a sliding support (30) to the resistance.

2. Footboard arrangement according to claim 1, **characterised in that** the housing is fastened to the vehicle body (2) by means of three fastening members (2, 3), two (2) of the three fastening members forming a rocker axis and a bending sensor (8) being associated with the third (3) rearward fastening member located opposite the housing aperture (7).

3. Footboard arrangement according to any of the preceding claims, **characterised in that** a bending sensor (8) is seated in the housing.

4. Footboard arrangement according to any of the preceding claims, **characterised in that** the fastening members (2, 3) form elastomer bearings (11, 12).

5. Footboard arrangement according to any of the preceding claims, **characterised in that** the rearward fastening member (3) is braced against a top part of the housing (13) and protrudes through an opening (14) in a bottom part of the housing.

6. Footboard arrangement according to any of the preceding claims, **characterised in that** the pushing device is a crank drive (16, 17, 18).

7. Footboard arrangement according to any of the preceding claims, **characterised in that** a connecting rod (17) driven by a driving crank (16) engages on the bending sensor (9).

8. Footboard arrangement according to any of the preceding claims, **characterised in that** a bending sensor (34) is associated with the rearward edge (5') of the footboard (5).

9. Footboard arrangement according to any of claims 7 or 8, **characterised in that** the connecting rod (17) is a shock absorber.

10. Footboard arrangement according to any of the preceding claims, **characterised by** bearing arms (31, 32) of the sliding support (30) engaging beneath the footboard (5) in the region of one, in particular the front, facing edge (5'), wherein the footboard (5) is supported by a bending sensor (34) in the region of its other, in particular rearward, facing edge (5').

11. Footboard arrangement according to claim 10, **characterised in that** the bearing arms (31, 32) are bendable when subjected to a vertical load so that when placed under load by a person a bending moment acts on a bending sensor (34).

12. Footboard arrangement according to any of the preceding claims, **characterised in that** a bending sensor (34) is arranged approximately centrally on a support beam (36) of the sliding support (30).

13. Footboard arrangement according to claim 12, **characterised in that** the bending sensor (9) acting in conjunction with the crank drive (6) is arranged approximately centrally on the support beam (36).

14. Footboard arrangement according to any of the preceding claims, **characterised by** displaceability of the rearward facing edge (5') of the footboard (5) relative to the sliding support (30) in the vertical direction.

## Revendications

1. Agencement de marchepied susceptible d'être fixé en dessous d'une porte (1) d'un véhicule, en particulier d'un véhicule ferroviaire, au moyen d'organes de fixation (2, 3), comprenant un boîtier (4) et un marchepied (5) disposé coulissant horizontalement à l'intéricur, le marchepied (5) étant susceptible d'être déplacé par un dispositif de coulissement (6) d'une position de stockage à une position de sortie par une ouverture (7) du boîtier et d'être rappelé dans la position de stockage, le déplacement de sortie et de rentrée étant interrompu lorsque le marchepied (5) rencontre une résistance ou bien est chargé dans la direction verticale, **caractérisé par** des capteurs de flexion (8, 9, 34) qui sont disposés, dans le cas d'une force verticale sur la ligne de force des organes de fixation (2, 3) du boîtier au point d'application de la force verticale, ou bien dans le cas de la rencontre d'une résistance sur la ligne de force allant du dispositifde coulissement (6) à la résistance ou allant de la fixation du marchepied sur un support de coulissement (30) à la résistance.

2. Agencement de marchepied selon la revendication 1, **caractérisé en ce que** le boîtier est fixé au caisson (2) du véhicule au moyen de trois organes de fixation (2, 3), deux (2) des trois organes de fixation formant un axe de basculement et le troisième organe de fixation (3), situé à l'arrière et à l'opposé de l'ouverture (7) de boîtier, étant associé à un capteur de flexion (8).

3. Agencement de marchepied selon l'une des revendications précédentes, **caractérisé en ce qu'**un capteur de flexion (8) est disposé dans le boîtier.

4. Agencement de marchepied selon l'une des revendications précédentes, **caractérisé en ce que** les organes de fixation (2, 3) sont constitués par des supports (11, 12) en élastomère.

5. Agencement de marchepied selon l'une des revendications précédentes, **caractérisé en ce que** l'organe de fixation arrière (3) s'appuie sur une couverture du boîtier (13) et fait saillie à travers une fenêtre (14) d'un fond du boîtier.

6. Agencement de marchepied selon l'une des revendications précédentes, **caractérisé en ce que** le dispositif de coulissemcnf est un entraînement à manivelle (16, 17,18).

7. Agcncerrtent de marchepied selon l'une des revendications précédentes, **caractérisé en ce qu'**une biellette (17) entraînée par une manivelle d'entraînement s'appuie sur le capteur de flexion (9).

8. Agencement de marchepied selon l'une des revendications précédentes, **caractérisé en ce qu'**un capteur de flexion (34) est associé au bord arrière (5') du marchepied (5).

9. Agencement de marchepied selon l'une des revendications 7 ou 8, **caractérisé en ce que** la biellette (17) est un amortisseur.

10. Agencement de marchepied selon l'une des revendications précédentes, **caractérisé en ce que** le marchepied (5) est supporté en dessous par des bras de support (31, 31) du support de coulissement (30) dans la zone de l'un de ses bords, en particulier le bord frontal avant (5'), et **en ce que** le marchepied (5) est supporté en dessous dans la zone de l'autre bord, en particulier le bord frontal arrière (5'), par un capteur de flexion (34).

11. Agencement de marchepied selon la revendication 10, **caractérisé en ce que** les bras de support (31, 32) sont susceptibles de fléchir sous une charge verticale de sorte que sous la charge d'une personne, un moment de flexion agisse sur un capteur de flexion (34).

12. Agencement de marchepied selon l'une des revendications précédentes, **caractérisé en ce qu'**un capteur de flexion (34) est disposé sensiblement au milieu d'une poutre de support (36) du support de coulissement (30).

13. Agencement de marchepied selon la revendication 12, **caractérisé en ce que** le capteur de flexion (9) coopérant avec l'entraînement à manivelle (6) est disposé sensiblement au milieu de la poutre de support (36).

14. Agencement de marchepied selon l'une des revendications précédentes, **caractérisé par** une aptitude relative au déplacement du bord frontal arrière (5') du marchepied (5) par rapport au support de coulisserrtent (30) dans la direction verticale.
